Europäisches Patentamt

European Patent Office

Office européen des brevets

(19)

(11) **EP 1 281 432 A1**

(12) **EUROPEAN PATENT APPLICATION**
published in accordance with Art. 158(3) EPC

(43) Date of publication:
05.02.2003 Bulletin 2003/06

(51) Int Cl.⁷: **B01D 69/08**, B01D 71/44,
B01D 71/68, C02F 1/44

(21) Application number: 02702803.4

(22) Date of filing: 07.03.2002

(86) International application number:
PCT/JP02/02128

(87) International publication number:
WO 02/072247 (19.09.2002 Gazette 2002/38)

(84) Designated Contracting States:
AT BE CH CY DE DK ES FI FR GB GR IE IT LI LU
MC NL PT SE TR

(30) Priority: 08.03.2001 JP 2001064666

(71) Applicant: TORAY INDUSTRIES, INC.
Tokyo 103-8666 (JP)

(72) Inventors:
• AKAMATSU, Hiroharu
Okazaki-shi, Aichi 444-0946 (JP)

• ABE, Hiroyoshi
Okazaki-shi, Aichi 444-0943 (JP)

(74) Representative: Hager, Thomas J., Dipl.-Ing. (FH)
Hoefer, Schmitz, Weber & Partner
Patentanwälte
Gabriel-Max-Strasse 29
81545 München (DE)

(54) **HOLLOW FIBER MEMBRANE, HOLLOW FIBER MEMBRANE MODULE, AND WATER PURIFIER**

(57)  A hollow fiber membrane, wherein an inner diameter (Id) is within the range of 100 to 200 $\mu$m, the ratio (Mt/Id) of a wall thickness (Mt) to the inner diameter (Id) is the range of 0.9 to 1.1, a bubble point (Bp) is at least 0.5 MPa, and the ratio (Di/Do) of the maximum major axis (Di) of the pores existing in the layer of up to 10 $\mu$m thick from an inner surface to the maximum major axis (Do) of the pores existing in the layer of up to 10 $\mu$m thick from an outer surface is within the range of 10.0 to 15.0; a hollow fiber membrane module formed of the hollow fiber membranes; and a water purifier formed of the hollow fiber membrane module.

Fig. 1

**Description**

TECHNICAL FIELD

The present invention relates to a hollow fiber membrane, a hollow fiber membrane module comprising a plurality of such hollow fiber membranes, and a water purifier composed of the hollow fiber membrane module.

The hollow fiber membrane of the present invention can be preferably used as a raw water filter membrane in a hollow fiber membrane module or a water purifier for purifying raw water having a high water pressure of higher than about 0.4 MPa, for example, for obtaining drinking water. The purification ability of the hollow fiber membrane module or the water purifier comprising such hollow fiber membranes can be kept high for a long period of time even though the water pressure of raw water is high. The purification ability includes the ability of reducing colon bacilli or Pseudomonas.

BACKGROUND ART

In recent years, for purification of tap water, used are active carbon for adsorbing and removing odors of chlorine and the like, and filter membranes capable of removing bacteria and suspended solids of about 0.3 μm. The filter membranes include microfiltration membranes, ultrafiltration membranes, reverse osmosis membranes, etc. These membranes are usually mainly made of polyethylene, polysulfone or polyacrylonitrile. These membranes are usually provided as hollow fiber membranes, flat membranes or tubular membranes.

Above all, hollow fiber membranes made of a polysulfone are popularly used as membranes for domestic filters since they are excellent in biological characteristics, heat resistance, chemicals, resistance, etc. Such hollow fiber membranes made of a polysulfone are disclosed in JP 7-232044 A and JP 2000-334277 A.

The hollow fiber membranes disclosed in the documents satisfy certain standards such as Cyst (decrease of spores) Test of US National Sanitation Foundation Protocol.

However, it has been found that in the case where such hollow fiber membranes are used as filter membranes of a domestic (home) filter for purifying raw water with a high water pressure, the domestic filter cannot always be used for a long period of time with the purification ability kept high, that is, cannot always maintain a high rate of reducing the intended materials for a long period of time. This has made us recognize the necessity of developing a domestic filter having a long useful life even if the raw water has a high water pressure.

On the other hand, as tests for determining the ability of removing the bacteria contained in raw water, there is a JWWA regulation S102 (1998) with respect to a water purifier. The regulation specifies a method comprising the steps of letting water flow through a water purifier at a pressure of 0.1 MPa, and examining the general bacteria and colon bacilli contained in the purified water of a specified total flow, and a method comprising the steps of once stopping filtration after sampling purified water, keeping water retained in the water purifier for 24 hours, then letting water flow for 10 seconds, sampling the purified water, and examining the general bacteria and colon bacilli contained in the purified water.

However, these ability tests are short-time tests at a low flow pressure and are not compulsory tests under severer conditions.

The object of the invention is to provide a hollow fiber membrane that, being able to improve the above-mentioned conventional problem, has excellent durability and can maintain a high filtration ability (a high rate of reducing the intended materials) even if the flow pressure of raw water is high, and also can reduce colon bacilli or Pseudomonas at a high rate. The object of the invention also includes providing a hollow fiber membrane module and a water purifier.

DISCLOSURE OF THE INVENTION

The hollow fiber membrane of the invention has an inner diameter (Id) in a range of 100 to 200 μm, a wall thickness (Mt) -to-inner diameter (Id) ratio (Mt/Id) in a range of 0.9 to 1.1, and a bubble point (Bp) of at least 0.5 MPa, and the ratio (Di/Do) of the maximum major axis (Di) of the pores existing in the layer of up to 10 μm thick from an inner surface to the maximum major axis (Do) of the pores existing in the layer of up to 10 μm thick from an outer surface in a range of 10.0 to 15.0.

In the above-mentioned hollow fiber membrane of the invention, it is preferred that the hollow fiber membrane is made of a polysulfone and polyvinyl pyrrolidone, and that the rate of the weight of polyvinyl pyrrolidone based on the weight of the hollow fiber membrane is 1.0 to 3.0 wt%.

The hollow fiber membrane module of the invention comprises a plurality of hollow fiber membranes of the invention mentioned above fastened to a support, in which the respective hollow fiber membranes are opened on one-end side and sealed on the other-end side in a mode where the respective hollow fiber membranes are paralleled in one certain direction, or in which the respective hollow fiber membranes are opened on both end sides in a mode where the respective hollow fiber membranes are paralleled in one certain direction and subsequently turned and paralleled in the opposite direction (U-shaped mode). This hollow fiber membrane module of the invention is called the first hollow fiber membrane module.

In the first hollow fiber membrane module, it is preferred that in the case where raw water containing 20 ppm of a dust having particle sizes of 5.0 $\mu$m and less is forced to flow at a pressure of 0.41 MPa for 1.5 minutes and subsequently suspended for 0.5 minute, and where the flow and suspension are repeated till the flow declines to 25% of the initial flow, the turbidity of the purified water becomes 0.15 or less, and that the occurrence rate of the hollow fiber membranes having a short diameter ratio of 0.70 or less at the outer circumference after the flow and suspension have been repeated till the turbidity of the purified water becomes 0.15 is 0.1% or less. This hollow fiber membrane module of the invention is called the second hollow fiber membrane module.

In the first hollow fiber membrane module, it is preferred that in the case where raw water having a colon bacilli count (RWBcn) of $10^7$ to $10^8$ CFUs/100 ml and containing 20 ppm of a dust having particle sizes of 5.0 $\mu$m and less is forced to flow at a pressure of 0.41 MPa for 4 minutes and subsequently suspended for 36 minutes, and where the flow and suspension are repeated 12 times, the colon bacilli count (RWBcn) of the raw water and the colon bacilli count (FWBcn) of the purified water satisfy the following formula:

$$LOG_{10} (RWBcn) - LOG_{10} (FWBcn) \geqq 6.0.$$

This hollow fiber membrane module of the invention is called the third hollow fiber membrane module.

In the first hollow fiber membrane module, it is preferred that in the case where raw water having a Pseudomonas count (RWPmn) of $10^7$ to $10^8$ CFUs/100 ml and containing 20 ppm of a dust haivng particle sizes of 5.0 $\mu$m and less is forced to flow at a pressure of 0.41 MPa for 4 minutes and subsequently suspended for 36 minutes, and where the flow and suspension are repeated 12 times, the Pseudomonas count (RWPmn) of the raw water and the Pseudomonas count (FWPmn) of the purified water satisfy the following formula:

$$LOG_{10} (RWPmn) - LOG_{10} (FWPmn) \geqq 6.0.$$

This hollow fiber membrane module of the invention is called the fourth hollow fiber membrane module.

The water purifier of the invention is composed a housing, any hollow fiber membrane module of the first through fourth hollow fiber membranes, contained in the housing, an inlet of raw water into the hollow fiber membrane module, provided in the housing, and an outlet of purified water filtered by the hollow fiber membrane module, provided in the housing.

The water purifier of the invention has, as required, an outlet for the concentrated water that has not permeated the hollow fiber membranes provided in the housing.

In the ability test of the hollow fiber membrane module using the bacteria, it is preferred to sterilize the hollow fiber membrane module in advance. Especially in the case of Pseudomonas, since it is widely distributed in the environment, it can happen that Pseudomonas is deposited on the hollow fiber membrane module to be tested, and such deposition must be avoided in the test.

BRIEF DESCRIPTION OF THE DRAWING

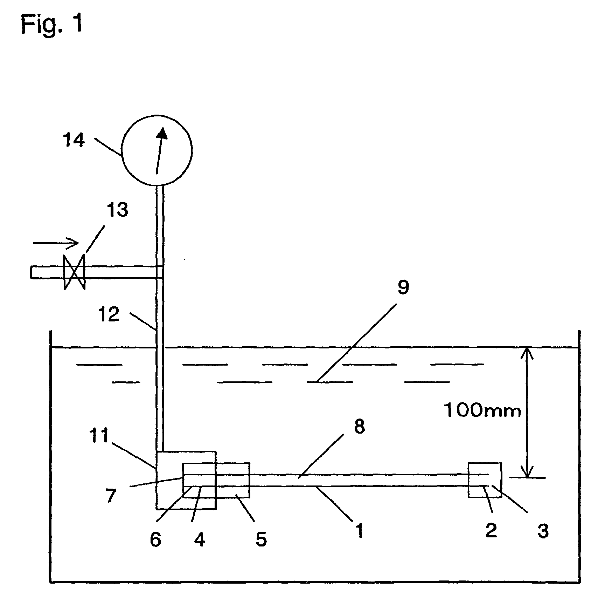

Fig. 1 is a schematic front view showing a bubble point measuring instrument.

THE BEST MODES FOR CARRYING OUT THE INVENTION

The hollow fiber membrane of the invention can be suitably used, for example, as a plurality of such hollow fiber membranes for forming a hollow fiber membrane module to be contained in a water purifier installed at a tap supplied with tap water having a high pressure of 0.41 MPa.

The hollow fiber membrane has an inner diameter (Id) in a range of 100 to 200 $\mu$m, and a wall thickness (Mt)-to-inner diameter (Id) ratio (Mt/Id) in a range of 0.9 to 1.1. The hollow fiber membrane satisfying these dimensions has durability against inner and outer pressures.

The hollow fiber membrane of the invention has a bubble point (Bp) of at least 0.5 MPa.

Method of Measuring the Bubble Point (Bp) of a Hollow Fiber Membrane:

Fig. 1 shows a schematic front view of a measuring instrument. Ten hollow fiber membranes 1 are used. The hollow fiber membranes 1 are sealed with a resin 3 on one-end side 2, and capped with a plastic cylinder 5 on the other-end side 4. The clearance 6 between the inner circumferential surface of the cylinder 5 and the hollow fiber membranes 1 is filled with a resin for sealing, and at the end faces 7 of the hollow fiber membranes 1, on the left end face of the cylinder 5, the hollow portions are opened. The specimen 8 is installed at a water depth of 10 cm in water 9 of a water tank with the longitudinal direction of the hollow fiber membranes 1 kept horizontal.

On the other hand, in the water 9 of the water tank, a pressure head 11 is located and engaged with a pressure air supply pipe 12 that is extended outside the surface of water 9. The pressure air supply pipe 12 is connected with a pressure air supply source (not illustrated) through a pressure reducing valve 13. The pressure air supply pipe 12 extending between the pressure reducing valve 13 and the pressure head 11 is provided with a pressure gauge 14.

In this measuring instrument, pressure air with a pressure rise rate of 0.1 MPa/10 seconds is supplied from the pressure air supply source through the pressure air supply pipe 12 and the open end faces 7 of the hollow fiber membranes 1 into the hollow fiber membranes 1. During this period, bubbling is visually observed, and the pressure at which bubbles are generated uniformly in the longitudinal direction of the hollow fiber membranes 1 is measured. The pressure is the bubble point (Bp).

If the bubble point (Bp) is less than 0.5 MPa, it means that the pores of the hollow fiber membranes are too large. It means that the hollow fiber membranes 1 leak numerous fine particles of 5.0 $\mu$m and less.

It is essentially required that the bubble point (Bp) of the hollow fiber membrane of the invention is 0.5 MPa or more, and it is preferred that the bubble point is 0.8 MPa or less. A hollow fiber membrane with a bubble point (Bp) of more than 0.8 MPa is too small in pore size, and if it is used in a water purifier, the important flow ability declines undesirably.

In the hollow fiber membrane of the invention, the ratio (Di/Do) of the maximum major axis (Di) of the pores existing in the layer of up to 10 $\mu$m thick from an inner surface to the maximum major axis (Do) of the pores existing in the layer of up to 10 $\mu$m thick from an outer surface is in a range of 10.0 to 15.0.

For obtaining the ratio (Di/Do), the cross section of the hollow fiber membrane is photographed at a magnification of 10,000X by means of SEM, and on the SEM photo, the maximum major axis (Di) of the pores existing in the layer of up to 10 $\mu$m thick from an inner surface and the maximum major axis (Do) of the pores existing in the layer of up to 10 $\mu$m thick from an outer surface are measured, and from the measured values, the ratio is calculated.

In the case where the ratio (Di/Do) is lower than 10.0, when an on-off test cycle pressure is applied to the respective hollow fiber membranes in the hollow fiber membrane module, the hollow fiber membranes are likely to be damaged at portions near the potting layer (adhesive resin layer) of the hollow fiber membrane module.

If the ratio (Di/Do) is higher than 15.0, the net of the three-dimensional net structure of each hollow fiber member becomes finer. So, when an on-off test cycle pressure is applied to the respective hollow fiber membranes, the hollow fiber membranes are damaged.

In a water purifier, the flow ability of the hollow fiber membranes used in it is important. It is desirable that the flow ability of the hollow fiber membranes is higher. However, at a higher flow ability, in the case where the raw water containing a dust is filtered intermittently repetitively, the life of the hollow fiber membranes becomes short. Therefore, it is preferred that the flow ability of the hollow fiber membranes is in a range of 7.5 to 75.0 ml/Pa·h·m$^2$. A more preferred range is 22.5 to 45.0 ml/Pa·h·m$^2$.

As the main component of the hollow fiber membrane, any of polysulfones, polyolefins and vinyl polymers can be used. Among them, a polysulfone is preferred. If a polysulfone is mixed with an adequate amount of hydrophilic polyvinyl pyrrolidone, the mixture improves the mechanical strength of the hollow fiber membrane, and the fine pores for achieving a large flow suitable for the water purifier can be easily designed.

In the case where polyvinyl pyrrolidone is mixed with a polysulfone, it is preferred that the rate of the weight of polyvinyl pyrrolidone based on the weight of the hollow fiber membrane is in a range of 1.0 to 3.0 wt%. A more preferred range is 1.0 to 2.0 wt%.

A water purifier in domestic use usually comprises 400 to 900 hollow fiber membranes. These hollow fiber membranes are paralleled in one direction, and usually bent in U-shape, when accommodated in a cylindrical case. At one end of the cylindrical case, the hollow fiber membranes and the cylindrical case are bonded for sealing, using a potting resin. In the case where the end faces of the hollow fiber membranes are sealed at this time, the end of the potting resin is cut later to open the end faces of the hollow fiber membranes.

In the case where the hollow fiber membrane module comprising the hollow fiber membranes of the invention is used, if the flow at a pressure of 0.41 MPa for 1.5 minutes and the suspension of flow for 0.5 minute are intermittently repeated till the flow declines to 25% of the initial flow, the turbidity of the purified water becomes 0.15 or less.

This means that even after the flow and suspension are repeated for a long period of time, the hollow fiber membranes are not damaged. It means that in the case where the hollow fiber membranes are used, for example, in a water purifier subject to on-off test cycle pressure, the life can be sustained for a long period of time.

The turbidity of purified water is a value expressed in nephelometric turbidity units (NTUs). The procedure of the reduction test is in conformity with the method specified in JIS S 3201 (1999). The turbidity can be analyzed, for example, using Nephelometer Model 2100 produced by HACH. The raw water used for the test contains 20 ppm of a dust having particle sizes of 5.0 µm and less.

In the hollow fiber membrane module comprising the hollow fiber membranes of the invention, when the flow and suspension are repeated till the turbidity of the purified water becomes 0.15, the occurrence rate of the hollow fiber membranes with a short diameter ratio of 0.70 or less at the outer circumference is 0.1% or less.

The reason is that the hollow fiber membranes of the invention are unlikely to be deformed or broken. This elongates the life of the water purifier.

The short diameter ratio at the outer circumference refers to the short diameter ratio at the outer circumference of a hollow fiber membrane deformed due to an external pressure. The occurrence rate of the hollow fiber membranes with a short diameter ratio of 0.70 or less can be obtained by dismantling the hollow fiber membranes after completion of the flow, observing the outer surfaces of the hollow fiber membranes in a range of 10 mm from the potting layer, and counting the number of the hollow fiber membranes that have a short diameter corresponding to 0.7 or less of the initial short diameter at the outer circumference.

The hollow fiber membrane and the hollow fiber membrane module of the invention can be produced, for example, as described below.

Fifteen parts of a polysulfone resin (P-3500 produced by Amoco Performance Products, Inc.), 7 parts of polyvinyl pyrrolidone (K-90 produced by BASF), 75 parts of dimethylacetamide and 3 parts of water are dissolved and stirred at 110°C for 14 hours, to obtain a raw liquid. The raw liquid is kept at 37°C and discharged from an annular slit die together with an injection containing polyvinyl pyrrolidone, glycerol and dimethylacetamide at 30:15:55 into air of 37°C and 70 to 90% relative humidity (RH). The filament is then immersed into a coagulating bath of 80°C hot water located 70 mm below, and is further passed through 70 to 85°C hot water, to obtain a hollow fiber membrane that is then wound as a hank. Thus, a long hollow fiber membrane wound as a hank is produced.

The hollow fiber membrane wound as a hank is cut at a certain length, and a fiber bundle consisting of a predetermined number of hollow fiber membranes with a certain length is formed. The fiber bundle is washed with 90°C hot water shower and heat-treated at 100 to 150°C. The heat-treated fiber bundle is twisted by 150 to 180°/20 cm in water and bent in U-shape. The U-shaped fiber bundle is washed with 90°C hot water shower and dried at 100°C or lower. Thus, a fiber bundle of hollow fiber membranes to be assembled as a hollow fiber membrane module is produced.

The fiber bundle is inserted into a cylindrical case, and potted at one-end, and to open the end faces of the hollow fiber membranes, the potting end is cut, to produce a hollow fiber membrane module.

It is preferred that the maximum major axis (Do) of the pores existing in the layer of up to 10 µm thick from an outer surface of a hollow fiber membrane is smaller than the maximum major axis (Di) of the pores existing in the layer of up to 10 µm thick from an inner surface, and it is especially preferred that the value of (Di/Do) is 10.0 to 15.0, since the bacteria reduction rate can be enhanced in a hollow fiber membrane module in which water is forced to permeate from the outer surface side to the inner surface side of each hollow fiber membrane for eliminating bacteria.

In a hollow fiber membrane having a characteristic reversed to the characteristic mentioned above, it can happen that bacteria penetrate into the inner layer of each hollow fiber membrane, and since the thickness of the membrane cannot be effectively used, the bacteria cutting ability declines. Furthermore, bacteria may leak.

The size of the bacterium used for testing bacterial reduction or the degree of leak with a hollow fiber membrane, i.e., the size of the test bacterium is selected, considering that the pore size of the active layer (outer layer) of the hollow fiber membrane is 1.0 µm on the average, and 3.0 µm at the maximum.

For load tests, in this specification, Klebsiella terrigena (ATCC #33257), one of colon bacilli, was selected as a challenge bacterium. Other reasons for selecting Klebsiella terrigena (rods with diameters of 0.3 to 1 µm and lengths of 0.6 to 6 µm) are that US EPA (Environment Protection Agency) employed it as a test bacterium when EPA established the standards for bacteria, viruses and cysts, and that it is easy to culture and not harmless to the health.

However, the test bacterium is not limited to Klebsiella terrigena, and any other bacterium equivalent to Klebsiella terrigena in size can be used.

Recently US NSF is formulating a standard for bacteria elimination by water purifiers, and as a test bacterium for the standard, Pseudomonas is attracting attention as bacteria widely distributed in the environment, easily available and easy to culture.

So, in this specification, Pseudomonas aeruginosa (ATCC #10145, having diameters of 0.7 to 1.0 µm and lengths of 2.0 to 4.0 µm) was selected as another test bacterium for carrying out load tests.

EXAMPLE 1

A raw solution obtained by dissolving and stirring 15 parts of a polysulfone resin (P-3500 produced by Amoco Performance Products, Inc.), 7 parts of polyvinyl pyrrolidone (K-90 produced by BASF), 75 parts of dimethylacetamide and 3 parts of water at 110°C for 14 hours was kept at 37°C, and discharged from an annular slit die with an outer diameter of 1.0 mm and an inner diameter of 0.5 mm together with an injection containing polyvinyl pyrrolidone, glycerol and dimethylacetamide at 30:15:55, into air of 37°C and 70 to 90% relative humidity (RH), and the filament was immersed in a coagulating bath of 80°C located 70 mm below, and further passed through 70 to 85°C hot water, then being wound as a hank.

The hollow fiber membrane wound as a hank was cut at a length of 18 ± 0.5 cm, washed with 90°C hot water washer, and heat-treated at 120°C.

The characteristics of the obtained hollow fiber membrane are listed in Table 1. The hollow fiber membrane had an inner diameter (Id) of 157 μm, a wall thickness (Mt) of 155 μm, a flow ability of 28.6 ml/Pa · h · cm$^2$ and a bubble point (Bp) of 0.70 MPa.

The ratio (Di/Do) of the maximum major axis (Di) of the pores existing in the layer of up to 10 μm thick from the inner surface to the maximum major axis (Do) of the pores existing in the layer of up to 10 μm thick from the outer surface was 11.6.

The amount of polyvinyl pyrrolidone contained in the hollow fiber membrane was analyzed by means of total nitrogen analysis, and found to be 2.0 wt%.

Nine hundred hollow fiber membranes obtained as described above were paralleled, twisted in water by 150 to 180°/20 cm and bent in U-shape, to make a bundle, and it was washed with 90°C hot water shower and dried at 80 to 100°C, to obtain a fiber bundle to be assembled as a hollow fiber membrane module.

The hollow fiber membrane bundle was inserted into a cylindrical case and potted at one end. The potting end was cut, to open the end faces of the hollow fiber membranes, thus obtaining a hollow fiber membrane module.

The hollow fiber membrane module was installed at the central portion of a cylindrical case, to obtain a cartridge. The clearance between the cylindrical case of the cartridge and the cylindrical case of the hollow fiber membrane module was packed with active carbon. The structure of the cartridge (water purifier) is described in JP 7-108260 A or JP 11-47733 A.

The cartridge was connected with a selector valve capable of being connected with a tap. Water was forced to flow for 1.5 minutes and then suspended for 0.5 minute, and the flow and suspension were repeated till the flow declined to 25% of the initial flow.

The water used for the flow was obtained by filtering tap water using a 0.01 μm filter with a reduction rate of 90%, further filtering using an active carbon filter for eliminating chlorine, and adding a dust having particle sizes of 5.0 μm and less (Nominal 0-5 μm A.T.D. produced by Powder Technology Incorporated) to achieve a concentration of 20 ppm. During the flow, the water temperature was controlled in a range of 20 ± 2.5°C, and the water was forced to flow at a pressure of 0.41 MPa without controlling the flow rate.

In the case where filtration was normally carried out, the turbidity of the purified water showed less than about 0.15.

The results are listed in Table 1. When the flow declined to 25% of the initial flow, the turbidity of the purified water was 0.08. Thereafter, to further confirm reliability, the flow and suspension were repeated, and with one time of flow and suspension as one cycle, the turbidity of the purified water did not become 0.15 or more till 500th cycle. When the turbidity of the purified water exceeded 0.15, the flow was 5% of the initial flow.

When the turbidity of the purified water exceeded 0.15, the hollow fiber membrane module was dismantled, and the outer surfaces of hollow fiber membranes in a range of 10 mm from the potting layer were observed. No hollow fiber membrane with a short diameter ratio of 0.70 or less at the outer circumference was found.


EXAMPLE 2


Hollow fiber membranes were produced and used for filtering water as described for Example 1, except that the hollow fiber yarn wound as a hank, cut at a length of 18 ± 0.5 cm and washed with 90°C hot water shower was heat-treated at a temperature of 140°C.

The results are listed in Table 1. The dimensions of the obtained hollow fiber membranes were 170 μm in inner diameter (Id) and 153 μm in wall thickness (Mt). The flow ability was 36.1 ml/Pa·h·cm$^2$, and the bubble point (Bp) was 0.70 MPa.

The ratio (Di/Do) of the maximum major axis (Di) of the pores existing in the layer of up to 10 μm thick from the inner surface of the hollow fiber membrane to the maximum major axis (Do) of the pores existing in the layer of up to 10 μm thick from the outer surface was 12.3.

As a result of intermittent flow, the turbidity of the purified water when the flow declined to 25% of the initial flow was 0.09. For further confirming reliability, the flow and suspension were repeated, and with one time of flow and suspension as one cycle, the turbidity of the purified water did not become 0.15 or more till 450th cycle. The flow when the turbidity of the purified water exceeded 0.15 was 7% of the initial flow.

When the turbidity of the purified water became more than 0.15, the hollow fiber membrane module was dismantled, and the outer surfaces of the hollow fiber membranes in a range of 10 mm from the potting layer were observed. No hollow fiber membrane with a short diameter ratio of 0.70 or less at the outer circumference was observed.

COMPARATIVE EXAMPLE 1

Hollow fiber membranes were produced and used for filtering water, except that the annular slit die used had an outer diameter of 1.0 mm and an inner diameter of 0.7 mm, and that the hollow fiber membrane wound as a hank, cut at a certain length and washed with 90°C hot water shower was heat-treated at 140°C.

The results are listed in Table 1. The obtained hollow fiber membranes had an inner diameter (Id) of 226 $\mu$m, a wall thickness (Mt) of 120 $\mu$m, a flow ability of 72.5 ml/Pa · h · cm$^2$ and a bubble point (Bp) of 0.51 MPa.

The ratio (Di/Do) of the maximum major axis (Di) of the pores existing in the layer up to 10 $\mu$m thick from the inner surface to the maximum major axis (Do) of the pores existing in the layer up to 10 $\mu$m thick from the outer surface was 5.0.

As a result of intermittent flow, the turbidity of the purified water when the flow declined to 25% of the initial flow was 0.12. However, when the flow and suspension were repeated further, the turbidity of the purified water became more than 0.15 at the 97th cycle after start of flow. The flow at this time was 15% of the initial flow.

When the turbidity of the purified water became more than 0.15, the hollow fiber membrane module was dismantled, and the outer surfaces of the hollow fiber membranes in a range of 100 mm from the potting layer were observed. The occurrence rate of the hollow fiber membranes with a short diameter ratio of 0.70 or less at the outer circumference was 3.3%.

COMPARATIVE EXAMPLE 2

Hollow fiber membranes were produced and used for filtering water as described for Comparative Example 1, except that the hollow fiber membrane wound as a hank, cut at a length of 18 ± 0.5 cm and washed with 90°C hot water shower was heat-treated at a temperature of 135°C.

The results are listed in Table 1. The obtained hollow fiber membranes had an inner diameter (d) of 220 $\mu$m, a wall thickness (Mt) of 120 $\mu$m, a flow ability of 78.3 ml/Pa · h · cm$^2$ and a bubble point (Bp) of 0.45 MPa.

The ratio (Di/Do) of the maximum major axis (Di) of the pores existing in the layer of up to 10 $\mu$m thick from the inner surface to the maximum major axis (Do) of the pores existing in the layer of up to 10 $\mu$m thick from the outer surface was 4.5.

As a result of intermittent flow, when the flow declined to 25% of the initial flow, the turbidity of the purified water was 0.70. The turbidity of the purified water became 0.15 at the 66th cycle.

When the turbidity of the purified water became more than 0.15, the hollow fiber membrane module was dismantled, and the outer surfaces of the hollow fiber membranes in a range of 10 mm from the potting layer were observed. The occurrence rate of the hollow fiber membranes with a short diameter ratio of 0.70 or less at the outer circumference was 3.5%.

COMPARATIVE EXAMPLE 3

Hollow fiber membranes were produced and used for filtering water as described for Comparative Example 1, except that the hollow fiber membrane wound as a hank, cut at a length of 18 ± 0.5 cm and washed with 90°C hot water shower was heat-treated at a temperature of 120°C.

The results are listed in Table 1. The obtained hollow fiber membranes had an inner diameter (Id) of 221 $\mu$m, a wall thickness (Mt) of 131 $\mu$m, a flow ability of 69.0 ml/Pa · h · cm$^2$ and a bubble point (Bp) of 0.55 MPa.

The ratio (Di/Do) of the maximum major axis (Di) of the pores existing in the layer of up to 10 $\mu$m thick from the inner surface to the maximum major axis (Do) of the pores existing in the layer of up to 10 $\mu$m thick from the outer surface was 4.1.

As a result of intermittent flow, the turbidity of the purified water when the flow declined to 25% of the initial flow was 0.10. However, when the flow and suspension were repeated further, the turbidity of the purified water became more than 0.15 at the 105th cycle after start of flow. At this time, the flow was 14% of the initial flow.

When the turbidity of the purified water became more than 0.15, the hollow fiber membrane module was dismantled, and the outer surfaces of the hollow fiber membranes in a range of 10 mm from the potting layer were observed. The occurrence rate of the hollow fiber membranes with a short diameter ratio of 0.70 or less at the outer circumference was 4.7%.

EXAMPLE 3

The hollow fiber membranes produced in Example 1 were used for a load test of bacteria. That is, the hollow fiber membranes had an inner diameter (Id) of 157 $\mu$m, a wall thickness (Mt) of 155 $\mu$m, and a flow ability of 28.6 ml/ Pa · h · cm$^2$.

Nine hundred such hollow fiber membranes were paralleled, twisted in water by 150 to 180°/20 cm and bent in U-shape, to make a bundle, and the bundle was washed with 90°C hot water shower and dried at 80 to 100°C, to obtain a fiber bundle to be assembled as a hollow fiber membrane module.

The hollow fiber membrane bundle was potted as described for Example 1, to obtain a hollow fiber membrane module. The hollow fiber membrane module was installed in a cylindrical case, and the clearance was packed with active carbon as described for Example 1, to obtain a water purifier.

The water purifier was used to carry out the following flow test for 13 days as a whole. During the period, the Klebsiella terrigena count (RWBcn) was kept at $10^7$ to $10^8$ CFUs/100 ml.

During the period from the 1st day to the 6th day, dust water A (water used: filtered and dechlorinated water, pH 6.5 to 8.5, dust content 0.1 to 0.7 ppm, TDS (total dissolved solids: adjusted using sea salts) 50 to 500 mg/L) was forced to flow at a pressure of 0.41 MPa at 15 to 25°C, twelve cycles per day, with 40 minutes as one cycle consisting of 4 minutes of flow and 36 minutes of suspension.

On the 7th and 8th days, the use of the water purifier was suspended.

This is intended to duplicate the ordinary condition of use at a general household. In general households, water purifiers are not always continuously used, but are usually used intermittently. While the water purifiers are not used, bacteria in the water retained in the water purifiers are likely to grow. The above-mentioned test is intended to confirm the bacteria reduction ability of a water purifier in such a case.

On the 9th and 10th days, dust water B (pH $9.0 \pm 0.2$, dust content 20 ppm or more, TDS $1500 \pm 150$ mg/L) was also forced to flow together at 15 to 25°C. On the 11th and 12th days, the use of the water purifier was suspended. The reason for the suspension is the same as that for the 7th and 8th days. On the 13th day, water was forced to flow under the same condition as on the 10th day. The purified water obtained by filtration immediately after suspension was also sampled.

At each point, three samples (n) were taken for obtaining bacterial counts. The bacterial counts were obtained according to the Guidelines of US California ELAP (Health Services Environmental Laboratory Accreditation Program). In the case where the bacterial count of leak was zero, a value of 1 was employed to calculate the logarithmic decrement.

As described above, the raw water and purified water were sampled, and on each testing day, the colon bacilli count (RWBcn) in the raw water and the colon bacilli count (FWBcn) of the purified water were obtained, and $LOG_{10}$ (RWBcn) - $LOG_{10}$ (FWBcn) was calculated to obtain a logarithmic decrement. The results are listed in Table 2. The logarithmic decrements of the respective samples on individual testing days and the logarithmic decrements as averages of all testing days were larger than 6.0, and a high bacteria elimination ability was confirmed.

EXAMPLE 4

The same water purifier as used in Example 3 was vacuum-sealed in a bag and the pressure was reduced to -0.099 MPa. It was conditioned in humidity at 50 to 70% relative humidity (RH) for 15 minutes, and sterilized by means of a mixed gas consisting of 20% of ethylene oxide gas (EOG) and 80% of $CO_2$ at 0.1 MPa and 42°C for 5 hours. Then, the pressure was reduced to -0.092 MPa, and the inside of the bag was pressurized to atmospheric pressure by means of air. This operation was repeated 5 times, to prepare a water purifier for testing.

The water purifier was used for the following flow test for 13 days as a whole. During the period, the Pseudomonas count (RWPmn) of the raw water was kept at $10^7$ to $10^8$ CFUs/100 ml.

During the period from the 1st day to the 6th day, dust water C (used water: filtered and dechlorinated water, pH 6.5 to 8.5, TOC (total organic carbon) 0.1 to 5 mg/L, adjusted using humic acid, dust content 0.1 to 0.7 ppm, TDS (total dissolved solids, adjusted using sea salts) 50 to 500 mg/L) was forced to flow at a pressure of 0.41 MPa and an ambient temperature repetitively, twelve cycles per day, with 40 minutes as one cycle consisting of 4 minutes of flow and 36 minutes of suspension.

On the 7th and 8th days, the use of the water purifier was suspended. The reason for the suspension is the same as that for Example 3.

On the 9th and 10th days, dust water D (water used: filtered and dechlorinated water, pH $9.0 \pm 0.2$, TOC 10 mg/L or more, humic acid, dust content 20 ppm or more, TDS $1500 \pm 150$ mg/L) was also forced to flow together at $4 \pm 1$°C.

On the 11th and 12th days, the use of the water purifier was suspended. The reason for suspension is the same as that for Example 3.

On the 13th day, water was forced to flow under the same condition as on the 10th day.

At an intermediate point of each testing day, water for bacterial counting was sampled. The purified water obtained by filtering immediately after suspension was also sampled. At each point, one sample (n) was taken irrespectively of whether it was raw water or purified water. On the 1st day, sampling was made at the time of start, and on the 3rd, 6th, 9th and 13th days, sampling was made 4 hours after start. On the 10th day, sampling was made at the final time of flow. The bacterial counts of respective samples were obtained.

The bacterial counts were obtained according to the Guidelines of US California ELAP (Health Services Environmental Laboratory Accreditation Program). In the case where the bacterial count of leak was zero, a value of 1 was employed to calculate the logarithmic decrement.

As described above, raw water and purified water were sampled, and on each testing day, the Pseudomonas count (RWPmn) in the raw water and the Pseudomonas count (FWPmn) of the purified water were obtained, and $LOG_{10}$ (RWPmn) - $LOG_{10}$ (FWPmn) was calculated to obtain a logarithmic decrement. The results are listed in Table 3. As shown in Table 3, the logarithmic decrements were larger than 6.0, and a high bacteria elimination ability was confirmed.

TABLE 1

| | Hollow fiber membranes | | | Flow ability (ml/ Pa·h·m$^2$) | Maximum major axis ratio of pores (Di/Do) |
|---|---|---|---|---|---|
| | Inner diameter (Id) (μm) | Wall thickness (Mt) (μm) | Wall thickness/ inner diameter (Mt/Id) | | |
| Example 1 | 157 | 155 | 0.99 | 28.6 | 11.6 |
| Example 2 | 170 | 153 | 0.90 | 36.1 | 12.3 |
| Comparative Example 1 | 226 | 120 | 0.53 | 72.5 | 5.0 |
| Comparative Example 2 | 220 | 120 | 0.55 | 78.3 | 4.5 |
| Comparative Example 3 | 221 | 131 | 0.59 | 69.0 | 4.1 |

TABLE 1 (continued)

| | Bubble point (Bp) (MPa) | Flow decrease rate to initial flow at higher than specific turbidity (%) | Occurrence rate of deformed hollow fiber membranes (%) |
|---|---|---|---|
| Example 1 | 0.70 | 93 | 0 |
| Example 2 | 0.70 | 93 | 0 |
| Comparative Example 1 | 0.51 | 85 | 3.3 |
| Comparative Example 2 | 0.45 | 71 | 3.5 |
| Comparative Example 3 | 0.55 | 86 | 4.7 |

TABLE 2 Klebsiella terrigena reduction rate

$LOG_{10}(RWBcn) - LOG_{10}(FWBcn)$

| Days elapsed | Bacterial load (CFU/ml) | Test results | | | LOG decrement *1 Average |
| --- | --- | --- | --- | --- | --- |
| | | Samples | | | |
| | | 1 | 2 | 3 | |
| 1 | $5.0 \times 10^7$ | 1 | 1 | 1 | 7.7 |
| 3 | $2.7 \times 10^8$ | 1 | 1 | 1 | 8.4 |
| 6 | $1.6 \times 10^8$ | 1 | 1 | 1 | 8.2 |
| *2 | $3.3 \times 10^7$ | 9500 | 1 | 1 | 6.2 |
| 9 | $3.3 \times 10^7$ | 1 | 1 | 1 | 7.5 |
| 10 | $2.6 \times 10^7$ | 1 | 1 | 1 | 7.4 |
| *2 | $1.0 \times 10^8$ | 3 | 1 | 1 | 7.9 |
| 13 | $1.0 \times 10^8$ | 1 | 1 | 1 | 8.0 |
| | | | | | 7.7 |

*1: Average of samples 1 to 3
*2: Sample obtained by filtering immediately after suspension

TABLE 3 Pseudomonas reduction rate

$LOG_{10}(RWPmn) - LOG_{10}(FWPmn)$

| Days elapsed | Bacterial load (CFU/ml) | Test results | | | LOG decrement *1 Average |
| --- | --- | --- | --- | --- | --- |
| | | Samples | | | |
| | | 1 | 2 | 3 | |
| 1 | $9.0 \times 10^7$ | <1 | <1 | <1 | >8.0 |
| 3 | $2.4 \times 10^8$ | <1 | <1 | <1 | >8.4 |
| 6 | $7.8 \times 10^8$ | <1 | <1 | <1 | >8.9 |
| 7-8 | | <1 | <1 | <1 | |
| 9 | $1.5 \times 10^8$ | <1 | <1 | <1 | >8.2 |
| 10 | $1.0 \times 10^7$ | <1 | <1 | <1 | >7.0 |
| 11-12 | | <1 | <1 | <1 | |
| 13 | $1.5 \times 10^7$ | <1 | <1 | <1 | >7.2 |
| | | | | | >8.0 |

*1: Average of samples 1 to 3
"<1": Indicates that detection limit was not reached

INDUSTRIAL APPLICABILITY

The hollow fiber membrane of the invention has an inner diameter (Id) in a range of 100 to 200 μm, a wall thickness (Mt)-to-inner diameter (Id) ratio (Mt/Id) in a range of 0.9 to 1.1, and a bubble point (Bp) of at least 0.5 MPa, wherein the ratio (Di/Do) of the maximum major axis (Di) of the pores existing in the layer of up to 10 μm thick from an inner surface to the maximum major axis (Do) of the pores existing in the layer of up to 10 μm thick from an outer surface is in a range of 10.0 to 15.0. The hollow fiber membrane has a high flow ability and excellent durability against loaded internal and external pressures.

A hollow fiber membrane module comprising such hollow fiber membranes and a water purifier containing the hollow fiber membrane module have a high flow ability and excellent durability against loaded internal and external pressures when used.

The water purifier has excellent durability when used in a district supplied with raw water with a high water pressure, and the high filtration ability can be maintained for a long period of time.

Since the water purifier reduces colon bacilli and Pseudomonas, it can be effectively used in a district with numerous bacteria.

**Claims**

1. A hollow fiber membrane, wherein an inner diameter (Id) is within the range of 100 to 200 μm, the ratio (Mt/Id) of a wall thickness (Mt) to the inner diameter (Id) is the range of 0.9 to 1.1, a bubble point (Bp) is at least 0.5 MPa, and the ratio (Di/Do) of the maximum major axis (Di) of the pores existing in the layer of up to 10 μm thick from an inner surface to the maximum major axis (Do) of the pores existing in the layer of up to 10 μm thick from an outer surface is within the range of 10.0 to 15.0.

2. A hollow fiber membrane, according to claim 1, wherein the hollow fiber membrane is made of a polysulfone and polyvinyl pyrrolidone, and the rate of the weight of polyvinyl pyrrolidone based on the weight of the hollow fiber membrane is 1.0 to 3.0 wt%.

3. A hollow fiber membrane module that comprises a plurality of hollow fiber membranes fastened to a support, in which the respective hollow fiber membranes are opened on one-end side and sealed on the other-end side in a mode where the respective hollow fiber membranes are paralleled in one certain direction, or in which the respective hollow fiber membranes are opened on both end sides in a mode where the respective hollow fiber membranes are paralleled in one certain direction and subsequently turned and paralleled in the opposite direction, **characterized in that** said hollow fiber membranes are the hollow fiber membranes as set forth in claim 1 or 2.

4. A hollow fiber membrane module, according to claim 3, wherein in the case where raw water containing 20 ppm of a dust having particle sizes of 5.0 μm and less is forced to flow at a pressure of 0.41 MPa for 1.5 minutes and subsequently suspended for 0.5 minute, and where the flow and suspension are repeated till the flow declines to 25% of the initial flow, the turbidity of the purified water becomes 0.15 or less, and wherein the occurrence rate of the hollow fiber membranes having a short diameter ratio of 0.70 or less at the outer circumference after the flow and suspension have been repeated till the turbidity of the purified water becomes 0.15 is 0.1% or less.

5. A hollow fiber membrane module, according to claim 3, wherein in the case where raw water having a colon bacilli count (RWBcn) of $10^7$ to $10^8$ CFUs/100 ml and containing 20 ppm of a dust having particle sizes of 5.0 μm and less is forced to flow at a pressure of 0.41 MPa for 4 minutes and subsequently suspended for 36 minutes, and where the flow and suspension are repeated 12 times, the colon bacilli count (RWBcn) of the raw water and the colon bacilli count (FWBcn) of the purified water satisfy the following formula:

$$LOG_{10} (RWBcn) - LOG_{10} (FWBcn) \geqq 6.0.$$

6. A hollow fiber membrane module, according to claim 3, wherein in the case where raw water having a Pseudomonas count (RWPmn) of $10^7$ to $10^8$ CFUs/100 ml and containing 20 ppm of a dust having particle sizes of 5.0 μm and less is forced to flow at a pressure of 0.41 MPa for 4 minutes and subsequently suspended for 36 minutes, and where the flow and suspension are repeated 12 times, the Pseudomonas count (RWPmn) of the raw water and the Pseudomonas count (FWPmn) of the purified water satisfy the following formula:

$$LOG_{10} (RWPmn) - LOG_{10} (FWPmn) \geqq 6.0.$$

7. A water purifier, which is composed of a housing, a hollow fiber membrane module contained in the housing, an inlet of raw water into said hollow fiber membrane module, provided in said housing, and an outlet of purified water filtered by said hollow fiber membrane module, provided in the housing, **characterized in that** said hollow fiber membrane module is the hollow fiber membrane module as set forth in any one of claims 3 through 6.

Fig. 1

## INTERNATIONAL SEARCH REPORT

| | International application No. |
|---|---|
| | PCT/JP02/02128 |

**A. CLASSIFICATION OF SUBJECT MATTER**
Int.Cl[7] B01D69/08, B01D71/44, B01D71/68, C02F1/44

According to International Patent Classification (IPC) or to both national classification and IPC

**B. FIELDS SEARCHED**

Minimum documentation searched (classification system followed by classification symbols)
Int.Cl[7] B01D67/00-71/82, C02F1/44

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)
WPIL

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 11-332980 A (Toray Industries, Inc.),<br>07 December, 1999 (07.12.99),<br>Par. No. [0020]<br>(Family: none) | 1,2<br>3-7 |
| Y | JP 2000-334277 A (Toray Industries, Inc.),<br>05 December, 2000 (05.12.00),<br>Figs. 1, 2<br>(Family: none) | 3-7 |
| Y | JP 2000-225304 A (Nikkiso Co., Ltd.),<br>15 August, 2000 (15.08.00),<br>Fig. 1<br>(Family: none) | 3-7 |

☐ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 28 May, 2002 (28.05.02) | 11 June, 2002 (11.06.02) |

| Name and mailing address of the ISA/ | Authorized officer |
|---|---|
| Japanese Patent Office | |
| Facsimile No. | Telephone No. |

Form PCT/ISA/210 (second sheet) (July 1998)